# EUROPÄISCHE PATENTSCHRIFT

(11) **EP 0 267 156 B1**
(45) Veröffentlichungstag und Bekanntmachung des Hinweises auf die Patenterteilung: **07.12.1994**
(21) Anmeldenummer: 87810621.0
(22) Anmeldetag: 29.10.1987
(51) Int. Cl.: B27C 9/02, B23Q 3/157, B23Q 7/04, B23B 31/26, B23D 47/04, B23Q 7/14

(54) **Vorrichtung zum Bearbeiten eines Werkstückes aus Holz, insbesondere von Holzbalken**
Apparatus for working wooden work pieces, in particular wooden beams
Appareil pour travailler des pièces en bois en particulier des poutres en bois

(30) Priorität: 04.11.1986 CH 4354/86
(43) Veröffentlichungstag der Anmeldung: 11.05.1988
(73) Patentinhaber: Fritz Krüsi Maschinenbau, CH-9105 Schönengrund (CH)
(72) Erfinder: Krüsi, Fritz, CH-9105 Schönengrund (CH)
(74) Vertreter: Wenger, René

(56) Entgegenhaltungen:
- EP-A- 0 084 271
- EP-A- 0 104 008
- EP-A- 0 111 565
- WO-A-80/02660
- DE-A- 1 948 170
- DE-U- 7 438 202
- FR-A- 2 350 186
- GB-A- 2 167 325
- US-A- 3 244 042
- PATENT ABSTRACTS OF JAPAN, Band 10, Nr. 231 (M-506), 12. August 1986; & JP-A-61 065 710 (SHINKO KOGYO K.K.) 04-04-1986
- PATENT ABSTRACTS OF JAPAN, Band 9, Nr. 162 (M-394)[1885], 6. Juli 1985; & JP-A-60 34 244 (OKUMA TEKKOSHO K.K.) 21-02-1985

## Beschreibung

Die Erfindung bezieht sich auf eine Vorrichtung zum Bearbeiten eines Werkstückes aus Holz, insbesondere von Holzbalken, gemäss dem Oberbegriff von Anspruch 1. Für die rationelle Bearbeitung von Holzbalken sind bereits Vorrichtungen bekannt, bei denen die Balken auf einem Rollschemel montiert nacheinander verschiedene Bearbeitungsstationen passieren, an denen je ein Bearbeitungswerkzeug angeordnet ist. So können die Balken beispielsweise an einer ersten Station abgelängt, an einer zweiten Station gefräst und an einer dritten Station gebohrt werden. Die bekannten Vorrichtungen arbeiten verhältnismässig unrationell, da viel Zeit zum Einrichten der Maschinen erforderlich ist und die einzelnen Arbeitsabläufe nur sehr begrenzt automatisierbar sind. Im modernen Ingenieur-Holzbau sind jedoch teilweise Bearbeitungsvorgänge erforderlich, bei denen eine Automatisierung wünschbar wäre, um die Gesamtkosten zu senken. So müssen beispielsweise für den Bau eines Fachwerkträgers die Enden von Holzbalken für die Aufnahme von Verbindungselementen geschlitzt und gebohrt werden.

Es sind zwar bereits Holzbearbeitungsvorrichtungen bekannt, bei denen das Werkzeug zusammen mit der Antriebsvorrichtung in verschiedenen Positionen im Vorschubbereich der Transportvorrichtung verschiebbar ist. Eine derartige Vorrichtung ist beispielsweise durch die FR-A-2,350,186 bekannt geworden. Gemäss dieser Publikation hat das Werkzeug allerdings nur eine beschränkte Bewegungsmöglichkeit und ein motorischer Vorschub des Werkzeuges ist nicht möglich. Obwohl insbesondere auch aus dem Bereich der Metallbearbeitung bereits Bearbeitungsautomaten mit automatischem Werkzeugwechsel bekannt sind, wie beispielsweise aus der GB-A-267 325, war es bisher nicht möglich, in der Holzbearbeitung Werkzeuge einzusetzen, die in vier Bewegungsrichtungen motorisch vorgeschoben werden können, und bei denen ein automatischer Werkzeugwechsel möglich ist.

Es ist daher eine Aufgabe der Erfindung, eine Vorrichtung der eingangs genannten Art zu schaffen, mit der auf äusserst rationelle Weise Werkstücke aus Holz vielseitig bearbeitbar sind, wobei sich die Bearbeitungsvorgänge weitgehend vorprogrammieren lassen. Dabei soll die Antriebsvorrichtung ohne unnötige Transmissionen eine unmittelbare Befestigung des Werkzeuges auf der Antriebswelle ermöglichen. Diese Aufgabe wird erfindungsgemäss mit einer Vorrichtung gelöst, welche die Merkmale von Anspruch 1 aufweist.

Da das Werkzeug zusammen mit der Antriebsvorrichtung im Vorschubbereich der Transportvorrichtung in verschiedenen Achsen bewegt werden kann, sind zwischen Antriebsvorrichtung und Werkzeug keine störenden Transmissionen wie z.B. Kardanwellen, Ketten usw. erforderlich. Die Antriebsvorrichtung ist selbst mit einer Werkzeughaltevorrichtung versehen, was die Aktionsmöglichkeiten des Werkzeugs vergrössert. Das unmittelbar über dem Aktionsbereich des Werkzeuges angeordnete Werkzeugmagazin erlaubt ein rasches automatisches Auswechseln der Werkzeuge. Nach Beendigung eines bestimmten Arbeitsganges, wie z.B. dem Ablängen der Balken mit einem Sägeblatt, kann in wenigen Sekunden das Sägeblatt gegen einen Bohrer ausgetauscht werden, so dass die Vorrichtung fast ohne Stillstandzeiten sofort für einen neuen Bearbeitungsvorgang bereit ist. Alle Bewegungsabläufe lassen sich frei programmieren, so dass auch komplizierte Bearbeitungsformen, wie z.B. gefräste Konturen und dergleichen möglich sind.

Besonders vielseitige Bearbeitungsmöglichkeiten ergeben sich, weil die Antriebsvorrichtung an einem Ausleger befestigt ist, der in einer Ebene quer zur Vorschubrichtung der Transport vorrichtung in vertikaler und in horizontaler Richtung verschiebbar ist, und weil die Antriebsvorrichtung ferner um die Achse des Auslegers und um eine Achse quer zur Achse des Auslegers drehbar ist. Zusammen mit einer entsprechenden Programmierung des Vorschubes und mit einer entsprechenden Anzahl Werkzeuge im Werkzeugmagazin lassen sich derart fast beliebige spanabhebende Bearbeitungsvorgänge durchführen.

Zweckmäßige Ausgestaltungen der Erfindung sind Gegenstand von abhängigen Ansprüchen.

Besonders einfach lassen sich die Werkzeuge im Werkzeugmagazin auswechseln, wenn das Werkzeugmagazin einen etwa parallel zum Ausleger angeordneten Halterechen mit in Reihe angeordneten Werkzeughaltern aufweist, und wenn der Halterechen zur Aufnahme bzw. zur Abgabe der Werkzeuge relativ zum Ausleger verschiebbar ist. Beim eigentlichen Auswechselvorgang fährt dabei die Antriebsvorrichtung in eine bestimmte Nullposition und betätigt lediglich die Werkzeughaltevorrichtung. Das Entladen und Laden des Werkzeugs erfolgt durch Verschieben der Werkzeughalterungen, an denen die einzelnen Werkzeuge festgeklemmt sind.

Der Vorschub der Werkstücke lässt sich besonders vorteilhaft durchführen, wenn die Transportvorrichtung wenigstens einen schienengebundenen Aufspannwagen mit einer Auflagefläche für das Werkstück aufweist, und wenn das Werkstück mit je einer separaten Spannvorrichtung mit einer Spannkraft in der Ebene der Auflagefläche und quer zu dieser Ebene beaufschlagbar ist. Die doppelseitige Spannmöglichkeit erlaubt eine optimale Positionierung der Werkstücke. Bei bestimmten Bearbeitungsprozessen kann ausserdem nur mit einer Spannvorrichtung gearbeitet werden.

Eine weitere Erleichterung der Bearbeitbarkeit kann erreicht werden, wenn das Werkstück quer zur Ebene der Auflagefläche mit einer Spannvorrichtung beaufschlagbar ist, die einen aufklappbaren Spannbalken aufweist, dessen Drehpunkt auf einer Seite der Auflagefläche liegt. Der Spannbalken kann dadurch lediglich zum Positionieren der Balken aktiviert werden. Anschliessend wird der Spannbalken aufgeklappt und und die Werkstücke werden lediglich durch die zweite Spannvorrichtung gehalten, welche in der Ebene der Auflagefläche spannt. Dadurch bleiben die Balken über ihre gesamte Länge auf ihrer Oberseite frei bearbeitbar, auch wenn die Balken auf mehreren Aufspannwagen aufliegen.

Da die Werkzeuge unmittelbar auf der Antriebswelle der Antriebsvorrichtung befestigt sind, muss letztere eine spezielle Bauweise aufweisen, damit ein automatischer Werkzeugwechsel möglich ist. Ganz besonders vorteilhaft lässt sich dieser Werkzeugwechsel realisieren, wenn die Antriebsvorrichtung ein Elektromotor mit Rotor und Stator und mit einer in einem Gehäuse gelagerten Antriebswelle ist, wobei die Antriebswelle als eine sich auf beiden Seiten sich über den Rotor erstreckende Hohlwelle ausgebildet ist, die an einem Ende mit einer Aufnahmevorrichtung zur kraftschlussigen Aufnahme eines Werkzeugs versehen ist, und wenn in der Hohlwelle eine Greifvorrichtung zum Festhalten eines Werkzeuges in der Aufnahmevorrichtung angeordnet ist. Auf diese Weise erfüllt die Antriebswelle eine Doppelfunktion, indem sie nicht nur das für die Aktivierung des Werkzeugs erforderliche Drehmoment abgibt, sondern auch noch ein automatisches Auswechseln der Werkzeuge ermöglicht.

Die Aufnahmevorrichtung weist in an sich bekannter Weise eine Mitnehmerscheibe auf, die einen Innenkonus zur Aufnahme eines Morsekegels umgibt, wobei die Greifvorrichtung eine an einer Spannstange befestigte Spannklaue aufweist, die durch axiale Verschiebung der Spannstange in der Hohlwelle betätigbar ist. Die Spannklaue ist so im Innern des Motors untergebracht und lässt sich über die Spannstange leicht öffnen.

Die Spannstange lässt sich besonders einfach betätigen, wenn an dem der Aufnahmevorrichtung gegenüberliegenden Ende der Hohlwelle eine Federvorrichtung angeordnet ist, die an der Spannstange angreift und mit der die Spannstange derart vorspannbar ist, dass die Spannklaue nur gegen die Federkraft öffenbar ist. Die Federvorrichtung verlängert so die Gesamtlänge des Motors nur geringfügig und lässt sich ausserdem gut im Motorengehäuse unterbringen. Besonders einfach lässt sich die Federvorrichtung aktivieren, wenn am Gehäuse ein Druckmittelzylinder angeordnet ist, dessen Kolben koaxial zur Spannstange angeordnet ist, und mit dem die Spannstange gegen die Kraft der Federvorrichtung in der Hohlwelle verschiebbar ist. Bei unbelastetem Kolben wird so die Spannstange durch die Federvorrichtung immer gespannt. Nur zum Wechseln der Werkzeuge muss der Kolben kurzzeitig betätigt werden, um die Spannstange zu verschieben. Diese Vorrichtung ist besonders einfach und betriebssicher. Die mit der Antriebswelle rotierenden Teile sind dabei auf ein Minimum reduziert.

Eine Reinigung der Aufnahmevorrichtung mittels Druckluft lässt sich auf besonders einfache Weise dadurch erreichen, dass sowohl die Spannstange als auch der Kolben mit einer koaxialen Bohrung versehen sind, wobei die beiden Bohrungen bei an die Spannstange gepresstem Kolben miteinander kommunizieren und wenn die Bohrung am Kolben an eine Druckluftquelle zum Ausblasen der Aufnahmevorrichtung angeschlossen ist. Auf diese Weise ist keine Abdichtung rotierender Teile erforderlich, da die Druckluft ja nur bei stillstehender Antriebswelle in die Spannstange eingeblasen wird.

Für den automatischen Werkzeugwechsel muss die Mitnehmerscheibe in eine bestimmte Position gebracht werden, damit die am Werkzeug vorgesehenen Mitnehmerbolzen oder Mitnehmerleisten in die Mitnehmerscheibe einrasten. Eine Positionierung der Mitnehmerscheibe lässt sich besonders vorteilhaft erreichen, wenn diese mit einem Arretierbolzen arretierbar ist, der in einer vorbestimmbaren Position der Mitnehmerscheibe in eine Vertiefung einrastbar ist. Bei eingerastetem Arretierbolzen ist so gewährleistet, dass die Aufnahmevorrichtung die Werkzeuge im Werkzeugmagazin in der richtigen Lage aufnimmt. Der Arretierbolzen ist dabei vorzugsweise an einem Kolben angeordnet, der in einem in das Motorengehäuse integrierten Druckmittelzylinder verschiebbar ist. Die Betätigung des Arretierbolzens lässt sich so auf besonders einfache Weise fernsteuern. Eine besonders schonende Arretierung kann dadurch erreicht werden, wenn die Ruheposition der Mitnehmerscheibe mit einem relativ zur Mitnehmerscheibe feststehenden Sensor feststellbar ist, und wenn der Arretierbolzen nur bei festgestellter Ruheposition aktivierbar ist. Dabei wird besonders vorteilhaft so verfahren, dass zuerst der Motor abgebremst wird, bis der Sensor Ruheposition der Mitnehmerscheibe meldet. Anschliessend wird der Arretierbolzen unter Vorspannung gegen die Mitnehmerscheibe gepresst, unabhängig davon, in welcher Position die Mitnehmerscheibe sich befindet. Schliesslich wird der Motor kurzzeitig nochmals aktiviert, bis der Arretierbolzen in die Vertiefung an der Mitnehmerscheibe einrastet. Auch bei schweren Werkzeugen mit relativ hoher Massenträgkeit treten so keine übermässigen Beanspruchungen von Mitnehmerscheibe bzw. Arretierbolzen auf.

Ein Ausführungsbeispiel der Erfindung wird in den Zeichnungen dargestellt und anschliessend genauer beschrieben. Es zeigen:
- Figur 1: eine perspektivische Darstellung einer erfindungsgemässen Vorrichtung,
- Figur 2: eine Draufsicht auf die Vorrichtung gemäss Figur 1,
- Figur 3: eine Frontalansicht eines einzelnen Aufspannwagens,
- Figur 4: eine Seitenansicht des Aufspannwagens gemäss Figur 3,
- Figur 5: einen Querschnitt durch die Ebene I-I bei Figur 3,
- Figur 6: einen Querschnitt durch eine Antriebsvorrichtung,
- Figur 7: eine perspektivische Darstellung der Greifvorrichtung in geöffneter und in geschlossener Position, und
- Figur 8: eine Draufsicht auf eine Mitnehmerscheibe.

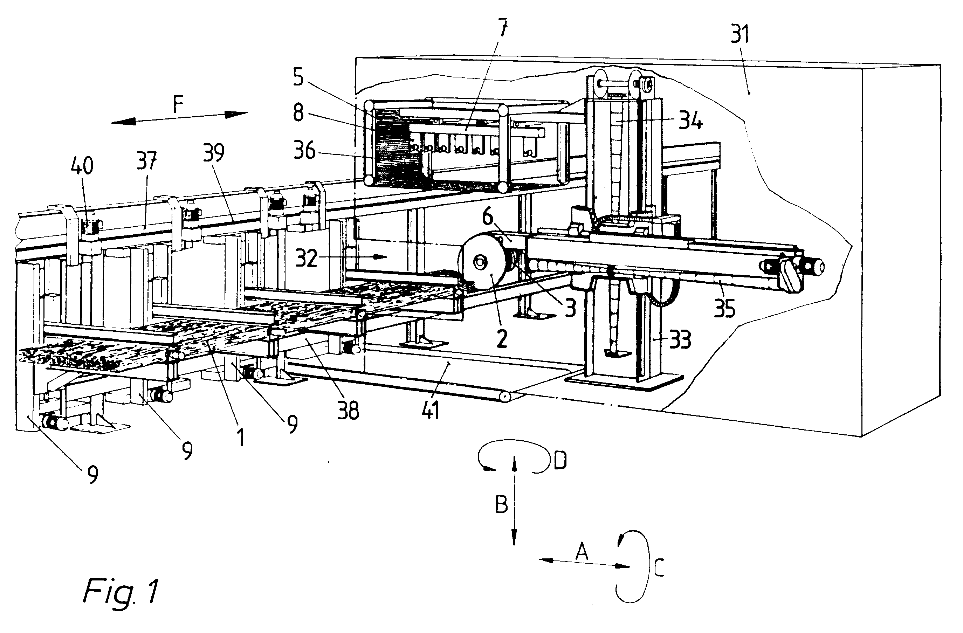

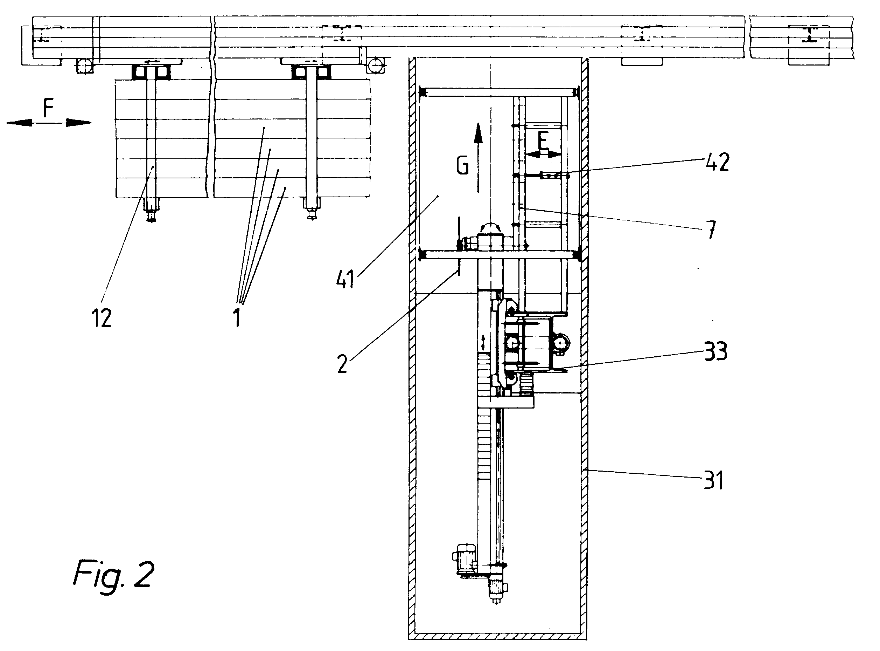

Wie insbesondere aus den Figuren 1 und 2 ersichtlich ist, sind mehrere Holzbalken 1 auf einzelnen Aufspannwagen 9 eingespannt. Diese Aufspannwagen lassen sich entlang einer oberen Schiene 37 und einer unteren Schiene 38 in Pfeilrichtung F verschieben. Das eigentliche Bearbeitungszentrum ist in einem Schutzgehäuse 31 untergebracht, welches in Figur 1 teilweise und in Figur 2 ganz aufgeschnitten dargestellt ist. Im Schutzgehäuse 31 ist auf beiden Seiten eine Gehäuseöffnung 32 angeordnet, so dass die Aufspannwagen 9 durch das Schutzgehäuse hindurchgeführt werden können. Die beiden Schienen 37 und 38 erstrecken sich auf beiden Seiten des Schutzgehäuses 31 etwa über die gleiche Länge, so dass wechselseitig gearbeitet werden kann. Während von einer Seite her die Balken dem Werkzeug zugeführt werden, kann auf der gegenüberliegenden Seite eine neue Lage Balken auf die Aufspannwagen gelegt und positioniert werden. Dadurch entstehen praktisch keine Stillstandzeiten der Maschine für das Bestücken.

Das Werkzeug 2 selbst ist unmittelbar an einer Antriebsvorrichtung 3 befestigt, die nachstehend noch im Detail beschrieben wird. Die Antriebsvorrichtung ist an einem Ausleger 6 befestigt, der sich in Pfeilrichtung A horizontal verschieben lässt. In vertikaler Richtung lässt sich der gesamte Ausleger in Pfeilrichtung B an einem Ständer 33 verschieben, so dass das Werkzeug 2 in einer Ebene quer zur Vorschubrichtung F innerhalb einer bestimmten Fläche jede beliebige Koordinate erreichen kann. Zur Verschiebung des Auslegers 6 in den beiden Bewegungsrichtungen dient eine vertikale Spindel 34 und eine horizontale Spindel 35. Beide Spindeln sind zum Schutz vor Verschmutzung von einer teleskopartig zusammenschiebbaren Ummantelung umgeben. Die beiden Spindeln 34 und 35 lassen sich mittels Elektromotoren auf Bruchteile einer Umdrehung genau drehen, wobei die dazu erforderlichen Steuervorrichtungen dem Fachmann bekannt sind.

Die Antriebsvorrichtung 3 lässt sich zusammen mit dem Werkzeug 2 in Pfeilrichtung C auch noch um die horizontale Bewegungsachse des Auslegers 6 und zusätzlich in Pfeilrichtung D um eine Achse quer zu dieser Bewegungsachse drehen. Auf diese Weise kann ein Werkzeug 2 quer zur Bewegungsebene des Auslegers 6 praktisch in jede beliebige Schräglage gebracht werden. Bei bestimmten Bearbeitungsvorgängen, beispielsweise bei einem Schrägschnitt, ist selbstverständlich die Bewegung des Werkzeugs 2 mit der Vorschubbewegung der Aufspannwagen 9 zu koordinieren, was sich jedoch mit einer entsprechenden Steuervorrichtung uber einen Rechner ohne weiteres realisieren lässt.

Ueber dem Aktionsbereich des Werkzeuges 2 ist ein Werkzeugmagazin 5 angeordnet. Dieses Werkzeugmagazin enthält einen Halterechen 7 mit einzelnen Werkzeughaltern 8. Die Werkzeughalter sind mit Klammern versehen, in welche die Werkzeuge mit ihrem Werkzeugschaft eingerastet werden können. Der Halterechen 7 ist mit Hilfe eines Druckmittelzylinders 42 in Pfeilrichtung E, also relativ zur Bewegungsebene des Auslegers 6 verschiebbar. Um das Werkzeugmagazin 5 bei einem Bearbeitungsvorgang vor Spänen und Holzstaub zu schützen, erstreckt sich ein Vorhang 36 wenigstens über die Unterseite des Werkzeugmagazins. Der Vorhang 36 ist vorzugsweise nach der Art eines Rolladens ausgebildet, der sich mit einer Antriebsvorrichtung schnell verschieben lässt. Das Auswechseln eines Werkzeuges im Werkzeugmagazin 5 geht wie folgt vor sich: Sobald ein Bearbeitungsvorgang mit einem bestimmten Werkzeug zu Ende ist, wird die Antriebsvorrichtung 3 automatisch in eine bestimmte Ladeposition gefahren. In dieser Ladeposition befindet sich das Werkzeug 2 mit seinem Schaft in der gleichen Ebene wie der Halterechen 7. Nun wird das Werkzeug 2 unter denjenigen Werkzeughalter 8 gefahren, in den das entsprechende Werkzeug gehört und der jetzt leer ist. Der Vorhang 36 wird geöffnet und der Ausleger 6 wird in Pfeilrichtung B hochgefahren, bis der Werkzeugschaft in den entsprechenden Werkzeughalter einrastet. Nun wird die Werkzeughaltevorrichtung in der Antriebsvorrichtung gelöst, so dass der Schaft des Werkzeuges freigegeben wird. Nun kann der ganze Halterechen mit dem soeben benutzten Werkzeug in Pfeilrichtung E zurückbewegt werden. Dies ist erforderlich, um dem Ausleger 6 in Pfeilrichtung A die nötige Bewegungsfreiheit zu geben, so dass er in eine Position verschoben werden kann, bei der die Achse der Antriebsvorrichtung koaxial mit der Achse des neu aufzunehmenden Werkzeuges am Halterechen 7 verläuft. Nun wird der Halterechen 7 wiederum in Pfeilrichtung E gegen den Ausleger 6 bewegt, bis das neu aufzunehmende Werkzeug in die Werkzeughaltevorrichtung an der Antriebsvorrichtung 3 einrastet. Der Ausleger 6 kann nun in Pfeilrichtung B nach unten bewegt werden, wobei das neu aufgenommene Werkzeug aus seinem Werkzeughalter 8 gelöst wird. Unmittelbar nach dem Verlassen des Werkzeugmagazins 5 wird der Vorhang 36 wieder geschlossen.

Unterhalb des Arbeitsbereichs des Werkzeugs 2 ist im Schutzgehäuse 31 am Boden ein Förderband 41 angeordnet, auf dem Holzabfälle wegtransportiert werden. Vorzugsweise ist im Innern des Schutzgehäuses 31 auch eine Abzugvorrichtung zum Absaugen von Holzstaub und kleineren Holzpartikeln angeordnet, wie dies bereits bei konventionellen Holzbearbeitungsmaschinen üblich ist.

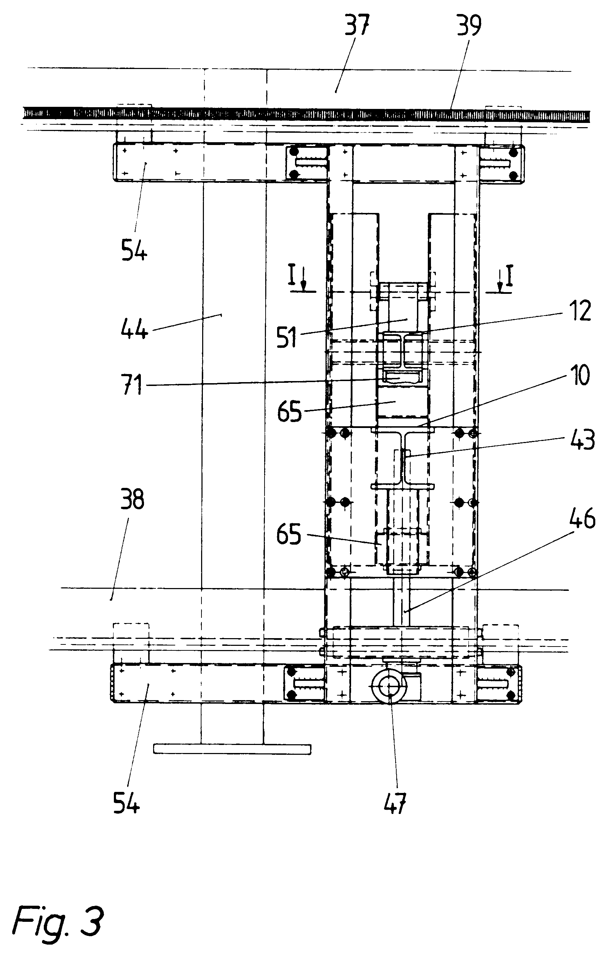

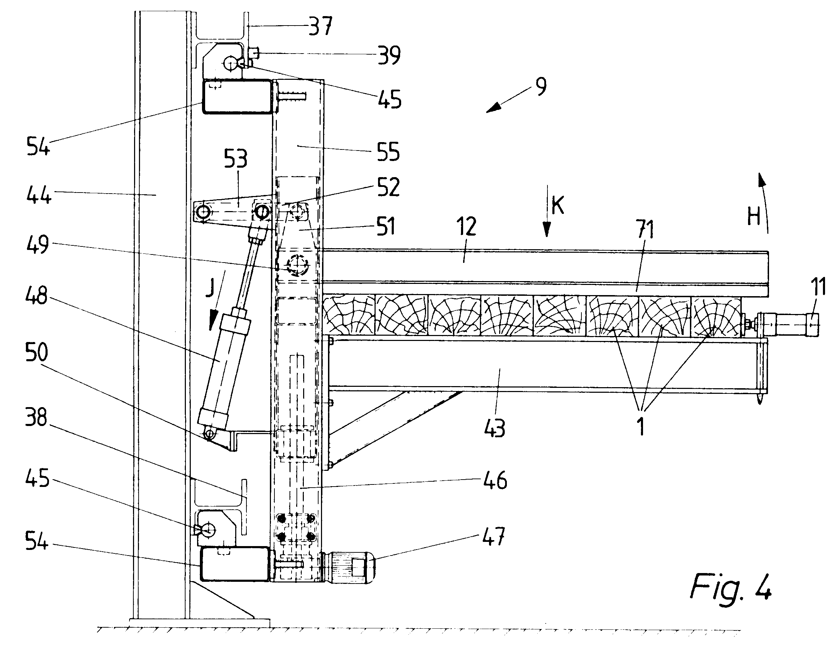

Der Aufbau und die Funktion der einzelnen Aufspannwagen 9 wird anschliessend anhand der Figuren 3 bis 5 erläutert. Wie bereits eingangs erwähnt, lassen sich diese Aufspannwagen entlang einer oberen Schiene 37 und einer unteren Schiene 38 verschieben, die im vorliegenden Fall als Doppel-T-Träger ausgebildet sind. Die beiden Schienen werden von vertikalen Stutzen 44 getragen, die in regelmässigen Abständen angeordnet sind. Selbstverständlich wäre aber auch eine andere Schienenführung möglich. So könnten beispielsweise auch am Boden zwei Schienen angeordnet werden, auf denen die Aufspannwagen 9 verschiebbar sind. Die dargestellte Bauweise hat jedoch den Vorteil, dass am Boden keinerlei bauliche Massnahmen erforderlich sind, und dass die Fläche unterhalb der aufgelegten Holzbalken 1 voll zugänglich bleibt, so dass beispielsweise mit einem Gabelstapler bis in den Bewegungsbereich der Aufspannwagen 9 gefahren werden kann.

Die zu bearbeitenden Holzbalken 1 liegen auf einem horizontalen Träger 43, der eine Auflagefläche 10 bildet. Der Träger 43 ist an zwei in vertikaler Richtung parallel verlaufenden und einander zugekehrten U-Profilen 55 befestigt. Diese wiederum sind an ihren Enden an horizontalen Rechteckprofilen 54 befestigt, welche die Schienenlager 45 tragen. Am äusseren freien Ende des Trägers 43 ist eine Spannvorrichtung 11 angeordnet, mit der die Holzbalken 1 in horizontaler Richtung verspannbar sind. Diese Spannvorrichtung ist in Bohrungen einsteckbar, die über die ganze Länge des Trägers 43 in bestimmten Abständen angeordnet sind. Auf diese Weise kann die Breite des Balkenbündels berücksichtigt werden, oder es können gar mehrere Spannvorrichtungen auf einem Träger eingesteckt werden.

Die beiden U-Profile 55 dienen gleichzeitig als Lager für ein Gleitprofilpaar 56, das in den U-Profilen in vertikaler Richtung verschiebbar ist. Das Gleitprofilpaar ist durch vertikale Verbindungsprofile 65 miteinander verbunden, von denen das untere in einer Hubspindel 46 gelagert ist. Die Hubspindel 46 ist mit einem Hubmotor 47 antreibbar, so dass die gesamte Einheit bestehend aus den Gleitprofilen 56 und den Verbindungsprofilen 65 in den U-Profilen 55 höhenverstellbar ist.

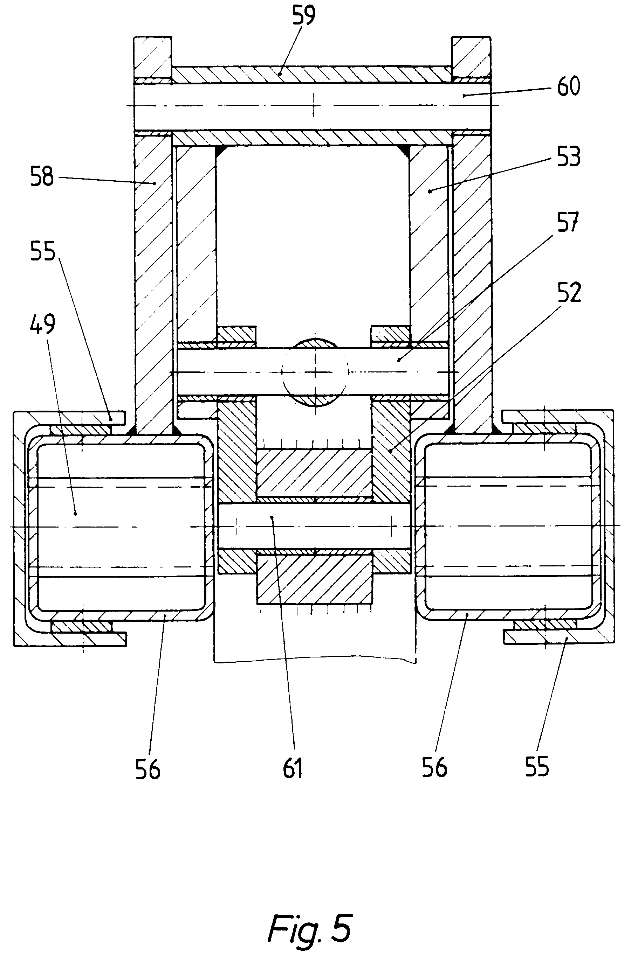

Im oberen Bereich der Gleitprofile 56 ist ein Spannbalken 12 um eine Schwenkachse 49 schwenkbar gelagert. Im rechten Winkel zum Spannbalken 12 ist ein Kniehebel 51 angeordnet. Dieser Kniehebel ist über einen speziellen Gelenkmechanismus mit Hilfe eines Hydraulikzylinders 48 betätigbar, der an einer Stutze 50 am unteren Verbindungsprofil 65 gelenkig angeordnet ist. Der Gelenkmechanismus ist insbesondere in Figur 5 genauer dargestellt. Er besteht aus einem kurzen Gelenkglied 52 und einem langen Gelenkglied 53, welche an der Gelenkachse 57 miteinander verbunden sind. An dieser Gelenkachse greift auch die Kolbenstange des Hydraulikzylinders 48 gelenkig an.

Das kurze Gelenkglied 52 ist an der Gelenkachse 61 mit dem freien Ende des Kniehebels 51 verbunden. Das lange Gelenkglied 53 ist an der Gelenkachse 60 an einem Widerlager 58 angelenkt. Das Widerlager 58 seinerseits ist am Gleitprofilpaar 56 befestigt.

Zum Hochschwenken des Spannbalkens 12 in Pfeilrichtung H muss ersichtlicherweise der Hydraulikzylinder 48 derart aktiviert werden, dass sich dessen Kolbenstange in Pfeilrechtung J bewegt. Die auf einer Ebene liegenden Gelenkglieder 52 und 53 knicken dabei nach unten ein und die Gelenkachse 57 dreht sich um die feststehende Gelenkachse 60 am Widerlager 58. Der Träger 43 wird vorzugsweise bei aufgeklapptem Spannbalken 12 mit den Holzbalken 1 bestückt. Diese Holzbalken sind teilweise verzogen und müssen daher mit einer geeigneten Spannvorrichtung mit einer in vertikaler Richtung wirkenden Presskraft beaufschlagt werden. Zu diesem Zweck wird der Hydraulikzylinder 48 in umgekehrter Richtung aktiviert, bis er wiederum die dargestellte horizontale Position einnimmt. Dabei liegen auch die beiden Gelenkglieder 52 und 53, insbesondere deren Gelenkachsen 60, 57 und 61 wiederum auf einer horizontalen Ebene. Nun wird der Hubmotor 47 aktiviert, so dass sich der an den Gleitprofilen 56 befestigte Spannbalken 12 samt Hydraulikzylinder 48 an der Hubspindel 46 in Pfeilrichtung K nach unten bewegt, bis er auf den Balken aufliegt. In dieser Position wird zum Aufbringen der eigentlichen Spannkraft ein Schlauch 71 mit Druckmittel aufgepumpt, der auf der Unterseite des Spannbalkens 12 angeordnet ist und sich über dessen ganze Länge erstreckt. Dadurch werden die Balken 1 gegen die Auflagefläche 10 des Trägers 43 gepresst. Selbstverständlich könnte die vertikale Presskraft auch noch auf andere Weise aufgebracht werden. Der besondere Vorteil der beschriebenen Gelenkvorrichtung besteht nun darin, dass das am freien Ende des Kniehebels 51 auftretende Drehmoment nicht auf den Hydraulikzylinder 48, sondern auf das Widerlager 58 übertragen wird. Am Hydraulikzylinder 48 ist nur ein verhältnismässig geringer Druck erforderlich, um die beiden Gelenkglieder 52 und 53 in horizontaler Lage zu halten. Dadurch wird auch bei hohen Presskräften am Spannbalken 12 der Hydraulikzylinder 48 nicht belastet. Auch eine durch die Kompressibilität des Druckmediums verursachte Federwirkung kann nicht eintreten.

Je nachdem, auf welche Weise die Holzbalken 1 zu bearbeiten sind, kann der Spannbalken 12 nach dem Pressen wieder hochgeklappt werden, so dass die Holzbalken 1 nur durch die Spannvorrichtung 11 in horizontaler Richtung gespannt und festgehalten werden. Dadurch bleibt die gesamte Oberseite der Holzbalken 1 frei für einen Bearbeitungsvorgang. Das Verschieben der Aufspannwagen 9 erfolgt entlang einer Zahnstange 39 an der oberen Schiene 37 mit Hilfe eines hier nicht näher dargestellten Motors.

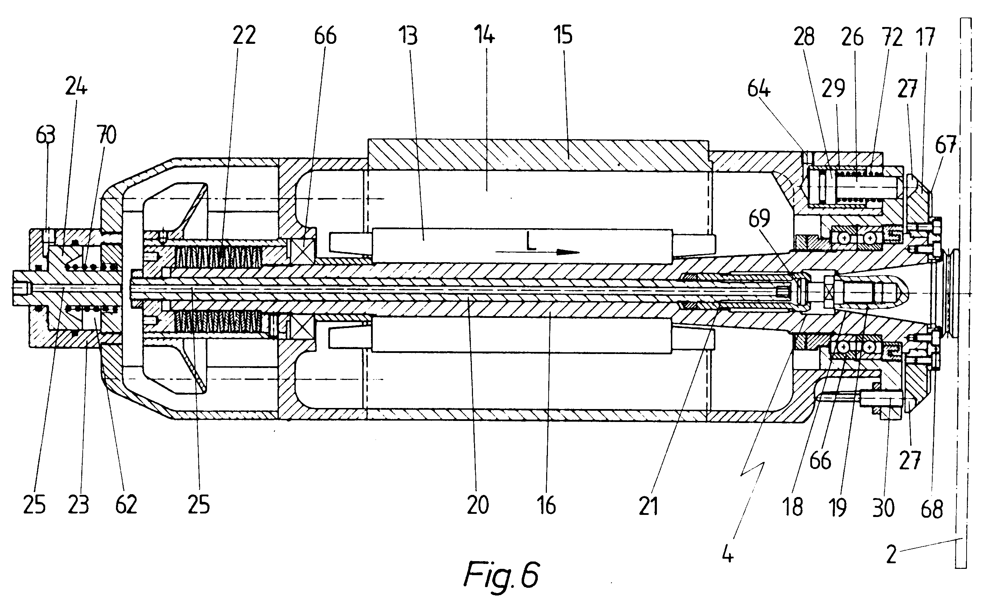

Die Antriebsvorrichtung für das Werkzeug 2 ist in Figur 6 genauer dargestellt. Sie besteht im wesentlichen aus einem Kurzschlussläufer-Elektromotor mit einem in einem Gehäuse 15 untergebrachten Rotor 13 und einem Stator 14. Rotor und Stator haben eine relativ schlanke, langgezogene Bauweise, um den Durchmesser des Motors so klein wie möglich zu halten. Je kleiner der gesamte Motorendurchmesser ist, desto grösser wird ersichtlicherweise die Nutztiefe eines Werkzeugs, beispielsweise eines Kreissägeblatts. Die Antriebswelle des Motors ist als Hohlwelle 16 ausgebildet, welche im Gehäuse 15 in Wälzlagern 66 gelagert ist. Die Hohlwelle 16 ist an einem Ende mit einer Werkzeughaltevorrichtung 4 versehen, welche das Werkzeug 2 kraftschlüssig festhält. Bei den an Holzbearbeitungsmaschinen erforderlichen hohen Drehzahlen ist eine spezielle Getriebestufe nicht erforderlich. Die Drehzahl des Motors kann auf an sich bekannte Weise über die Frequenz geregelt werden.

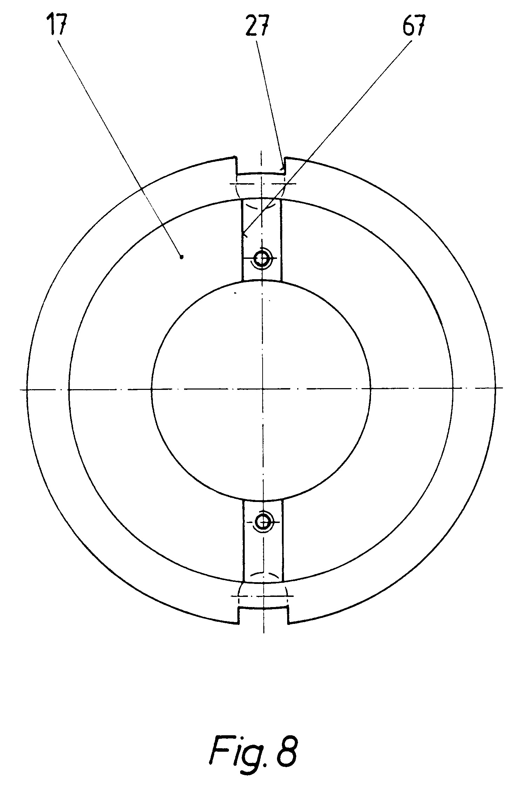

Die Werkzeughaltevorrichtung 4 besteht im wesentlichen aus einer Mitnehmerscheibe 17 und aus einem Innenkonus 18. Die Holzbearbeitungswerkzeuge weisen einen Steilkegel 19 mit diametral gegenüberliegenden Mitnehmernuten auf, welche in bestimmten Normmassen angeordnet sind. Der Steilkegel 19 passt formschlüssig in den Innenkonus 18, und die diametral gegenüberliegenden Keile 68, die an der Mitnehmerscheibe 17, bzw. der Hohlwelle 16 befestigt sind, greifen in die Mitnehmernuten des Steilkegels 19 ein. Die beiden Keile 68 liegen in den Keilbahnen 67 und werden dort festgeschraubt, wie aus Figur 8 ersichtlich ist, wo nur die Keilbahnen mit der Gewindebohrung dargestellt sind. In den Steilkegel 19 ist ein Spannzapfen 69 geschraubt, an dem der Steilkegel in den Innenkonus hineingezogen und festgehalten werden kann.

In der Hohlwelle 16 ist eine Spannstange 20 axial verschiebbar gelagert. An einem Ende dieser Spannstange 20 ist eine Spannklaue 21 befestigt, welche derart radial vorgespannt ist, dass sie sich öffnet, sobald die Spannstange 20 in Pfeilrichtung L gegen den Innenkonus bewegt wird. Bei eingesetztem Steilkegel kann die Spannklaue auf diese Weise den Spannzapfen 69 erfassen. Wird die Spannstange 20 in die entgegengesetzte Richtung gespannt, so schliesst sich die Spannklaue und zieht den Steilkegel 19 in den Innenkonus 18.

Zum Spannen der Spannstange 20 dient ein Federpaket 22, welches an einem Ende der Hohlwelle 16 angeordnet ist und an der Spannstange 20 angreift. Das Federpaket 22 besteht aus geschichteten Tellerfedern und ist derart dimensioniert, dass das Werkzeug 2 auch bei hohen Axialkräften sich nicht aus der Werkzeughaltevorrichtung 4 lösen kann.

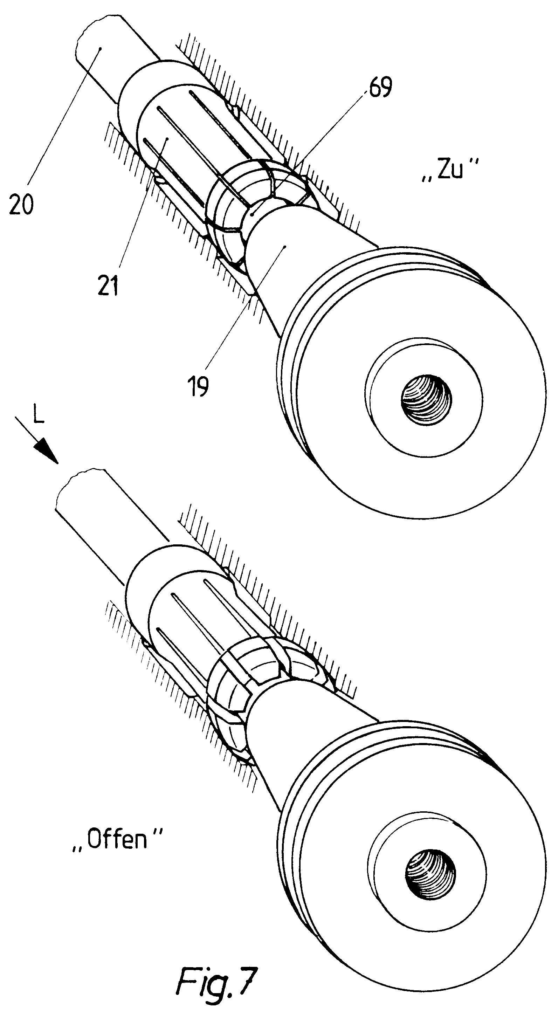

Zum Oeffnen der Spannklaue 21 bzw. zum Verschieben der Spannstange 20 in Pfeilrichtung L dient ein Kolben 24, der koaxial zur Spannstange 20 in einem Druckmittelzylinder 23 angeordnet ist. Der Druckmittelzylinder 23 hat auf einer Seite einen Druckmittelanschluss 63 und der Kolben 24 ist mit einer Feder 70 vorgespannt, so dass er in unbelastetem Zustand die in der Zeichnung dargestellte Position einnimmt. In dieser Position berührt der Kolben 24 die Spannstange 20 nicht, so dass auf letztere die gesamte Kraft des Federpakets 22 einwirkt. Soll das Werkzeug 2 aus der Werkzeughaltevorrichtung 4 entfernt werden, so wird der Kolben 24 aktiviert, so dass er die Spannstange 20 gegen die Kraft des Federpakets 22 in Pfeilrichtung L verschiebt. Dabei öffnet sich die Spannklaue 21 und gibt den Spannzapfen 69 frei, wie in Figur 7 dargestellt ist.

Sowohl der Kolben 24 als auch die Spannstange 20 sind mit einer koaxialen Bohrung 25 versehen, wobei diese Bohrungen bei gegen die Spannstange 20 gepresstem Kolben 24 miteinander kommunizieren. Diese Bohrungen dienen dazu, die Werkzeughaltevorrichtung bei jedem Werkzeugwechsel mit Druckluft auszublasen und derart von Sägestaub und dergleichen zu reinigen.

Zur automatischen Werkzeugaufnahme muss die Mitnehmerscheibe 17 immer in die gleiche Position gebracht werden, damit die Mitnehmerkeile 68 in die Mitnehmernut des Steilkegels eingreifen. Diese Positionierung erfolgt mit Hilfe eines Arretierbolzens 26 und mit einem Sensor 30, welche beide im Laufbereich der Mitnehmerscheibe 17 am Motorengehäuse angeordnet sind. Der Arretierbolzen ist an einem Kolben befestigt, der in einem Druckmittelzylinder 29 verschiebbar ist. Dieser Zylinder ist vorzugsweise in das Motorengehäuse integriert und wird über einen Druckmittelanschluss 64 versorgt. Vorzugsweise handelt es sich dabei um einen pneumatisch betätigten Kolben, der ebenfalls mit einer Feder 72 vorgespannt ist. In unbelastetem Zustand ist der Arretierbolzen 26 wie in der Zeichnung dargestellt eingefahren, so dass sich die Mitnehmerscheibe frei drehen kann. Der Sensor 30 dient dazu, Stillstand oder Drehung bzw. eine ganz bestimmte Position der Mitnehmerscheibe abzutasten. Die Mitnehmerscheibe 17 kann mit dem Arretierbolzen an Vertiefungen 27 arretiert werden, welche Vertiefungen im vorliegenden Ausführungsbeispiel auch zur Signalbildung für den Sensor 30 dienen. Der Sensor 30 ist eine elektromagnetische Sonde, welche feststellt, ob eine Vertiefung 27 im Bereich der Sonde liegt oder nicht. Selbstverständlich könnte der Sensor 30 auch eine optische Sonde sein, welche einen Hell-Dunkel-Code an der Mitnehmerscheibe 17 abtastet.

Beim eingangs erwähnten automatischen Wechsel eines Werkzeugs spielt sich in der Antriebsvorrichtung folgender Vorgang ab: Der Motor wird abgebremst, bis der Sensor 30 den Stillstand der Mitnehmerscheibe 17 meldet. Die Mitnehmerscheibe 17 bleibt dabei in einer beliebigen Position stehen, so dass der Sensor 30 entweder nur dunkel bzw. Metall oder nur hell bzw. Nichtmetall meldet. Nach dem festgestellten Stillstand der Mitnehmerscheibe wird der Pneumatikkolben 28 aktiviert, so dass der Arretierbolzen 26 unter Vorspannung gegen die Mitnehmerscheibe 17 gepresst wird. Befindet sich die Vertiefung 27 zufälligerweise genau in der richtigen Position, so rastet der Arretierbolzen 26 ein und es ist kein weiterer Positionierschritt mehr erforderlich. Ist eine der beiden Vertiefungen 27 jedoch nicht deckungsgleich mit dem Arretierbolzen, so wird der Motor kurzzeitig nochmals aktiviert, bis der Sensor 30 eine Vertiefung 27 meldet. Der vorgespannte Arretierbolzen 26 rastet nun sofort in die gegenüberliegende Vertiefung, so dass die Mitnehmerscheibe 17 nicht mehr weitergedreht werden kann.

Nach erfolgter Positionierung der Mitnehmerscheibe wird der Kolben 24 auf die genannte Weise aktiviert, so dass sich die Spannklaue 21 öffnet. Dabei wird gleichzeitig Druckluft über die Bohrung 25 in die Werkzeughaltevorrichtung geblasen. Nun kann das Werkzeug mit seinem Steilkegel 19 aus dem Innenkonus 18 entfernt werden. Anschliessend wird ein neues Werkzeug in die Werkzeughaltevorrichtung 4 eingesetzt, dessen Mitnehmernuten in genau der gleichen Position liegen, wie das soeben abgegebene Werkzeug. Nun wird der Druckmittelzylinder 23 entspannt, so dass die Spannstange 20 wiederum durch die Kraft des Federpakets 22 gespannt wird und die Spannklaue 21 sich schliesst. Gleichzeitig wird die Druckluftzufuhr zum Ausblasen der Werkzeughaltevorrichtung unterbrochen. Anschliessend wird der Pneumatikzylinder 29 entspannt, so dass der Arretierbolzen 26 durch die Feder 72 aus der Vertiefung 27 gepresst wird. Nun ist die Antriebsvorrichtung wiederum betriebsbereit. Durch die ausserordentlich schlanke und kurze Bauweise der Antriebsvorrichtung wird ersichtlicherweise ein grosser Aktionsbereich des Werkzeugs 2 erreicht. Dies betrifft einerseits die Schnittiefe des Werkzeugs und andererseits die Drehbarkeit der Antriebsvorrichtung in den Pfeilrichtungen C und D gemäss Figur 1 mit einem möglichst kurzen Radius.

## Patentansprüche

1. Vorrichtung zum Bearbeiten eines Werkstückes (1) aus Holz, insbesondere von Holzbalken, mit einer Transportvorrichtung zum Einspannen und Verschieben des Werkstückes und mit wenigstens einem Werkzeug (2), das mittels einer Antriebsvorrichtung (3) antreibbar ist, welche aus einem Elektromotor besteht, an dem das Werkzeug unmittelbar befestigt ist, wobei die Antriebsvorrichtung mit dem Werkzeug (2) im Vorschubbereich der Transportvorrichtung (9) in mehreren Bewegungsachsen verschiebbar angeordnet ist, dadurch gekennzeichnet,
- dass die Antriebsvorrichtung an einem Ausleger (6) befestigt ist, der in einer Ebene quer zur Vorschubrichtung (F) der Transportvorrichtung in vertikaler und horizontaler Richtung (B, A) motorisch verschiebbar ist, und dass die Antriebsvorrichtung (3) ferner um die Achse des Auslegers (C) und um eine Achse quer zur Achse des Auslegers (D) motorisch drehbar ist,
- dass die Antriebsvorrichtung (3) eine Werkzeughaltevorrichtung zur wechselweisen Aufnahme verschiedener Werkzeuge aufweist,
- dass über dem Aktionsbereich des Werkzeuges ein Werkzeugmagazin (5) mit mehreren Werkzeugen angeordnet ist,
- dass die Antriebsvorrichtung zur Aufnahme bzw. Abgabe eines Werkzeuges in das Werkzeugmagazin verschiebbar ist,
- dass die Transportvorrichtung wenigstens einen schienengebundenen, motorisch verschiebbaren Aufspannwagen (9) aufweist,
- und dass die Vorschubbewegung des Aufspannwagens (9) mit der Bewegung des Werkzeugs (2) koordiniert steuerbar ist.

2. Vorrichtung nach Anspruch 1, dadurch gekennzeichnet, dass das Werkzeugmagazin (5) einen etwa parallel zum Ausleger angeordneten Halterechen (7) mit in Reihe angeordneten Werkzeughalterungen (8) aufweist, und dass der Halterechen (7) zur Aufnahme bzw. zur Abgabe der Werkzeuge relativ zum Ausleger (6) verschiebbar ist.

3. Vorrichtung nach Anspruch 1 oder 2, dadurch gekennzeichnet, dass der Aufspannwagen (9) eine Auflagefläche (10) für das Werkstück (1) aufweist, und dass das Werkstück mit wenigstens je einer separaten Spannvorrichtung (11, 71) mit einer Spannkraft in der Ebene der Auflagefläche und quer zu dieser Ebene beaufschlagbar ist.

4. Vorrichtung nach Anspruch 3, dadurch gekennzeichnet, dass das Werkstück (1) quer zur Ebene der Auflagefläche (10) mit einer Spannvorrichtung beaufschlagbar ist, die einen aufklappbaren Spannbalken (12) aufweist, dessen Drehpunkt (49) auf einer Seite der Auflagefläche liegt.

5. Vorrichtung nach einem der Ansprüche 1 bis 4 bestehend aus einem Elektromotor mit einem einen Rotor (13) und einen Stator (14) enthaltenden Gehäuse (15) und mit einer im Gehäuse gelagerten Antriebswelle, dadurch gekennzeichnet, dass die Antriebswelle als eine sich auf beiden Seiten über den Rotor erstreckende Hohlwelle (16) ausgebildet ist, die an einem Ende mit einer Aufnahmevorrichtung zur kraftschlüssigen Aufnahme eines Werkzeugs (2) versehen ist, und dass in der Hohlwelle (16) eine Greifvorrichtung zum Festhalten eines Werkzeuges in der Aufnahmevorrichtung angeordnet ist.

6. Vorrichtung nach Anspruch 5, dadurch gekennzeichnet, dass die Aufnahmevorrichtung eine Mitnehmerscheibe (17) aufweist, die einen Innenkonus (18) zur Aufnahme eines Morsekegels (19) umgibt, und dass die Greifvorrichtung eine an einer Spannstange (20) befestigte Spannklaue (21) aufweist, die durch axiale Verschiebung der Spannstange in der Hohlwelle (16) betätigbar ist.

7. Vorrichtung nach Anspruch 6, dadurch gekennzeichnet, dass an dem der Aufnahmevorrichtung gegenüberliegenden Ende der Hohlwelle (16) eine Federvorrichtung (22) angeordnet ist, die an der Spannstange (20) angreift und mit der die Spannstange derart vorspannbar ist, dass die Spannklaue (21) nur gegen die Federkraft öffenbar ist.

8. Vorrichtung nach Anspruch 7, dadurch gekennzeichnet, dass am Gehäuse ein Druckmittelzylinder (23) angeordnet ist, dessen Kolben (24) koaxial zur Spannstange (20) angeordnet ist und mit dem die Spannstange gegen die Kraft der Federvorrichtung (22) in der Hohlwelle (16) verschiebbar ist.

9. Vorrichtung nach Anspruch 8, dadurch gekennzeichnet, dass sowohl die Spannstange (20) als auch der Kolben (24) mit einer koaxialen Bohrung (25) versehen sind, dass die beiden Bohrungen bei an die Spannstange (20) gepresstem Kolben (24) miteinander kommunizieren, und dass die Bohrung am Kolben (24) an eine Druckluftquelle zum Ausblasen der Aufnahmevorrichtung angeschlossen ist.

10. Vorrichtung nach einem der Ansprüche 6 bis 9, dadurch gekennzeichnet, dass die Mitnehmerscheibe (17) mit einem Arretierbolzen (26) arretierbar ist, der in einer vorbestimmbaren Position der Mitnehmerscheibe (17) in eine Vertiefung (27) einrastbar ist.

11. Vorrichtung nach Anspruch 10, dadurch gekennzeichnet, dass der Arretierbolzen (26) an einem Kolben (28) angeordnet ist, der in einem in das Gehäuse (15) integrierten Druckmittelzylinder (29) verschiebbar ist.

12. Vorrichtung nach Anspruch 10 oder 11, dadurch gekennzeichnet, dass die Ruheposition der Mitnehmerscheibe (17) mit einem relativ zur Mitnehmerscheibe feststehenden Sensor (30) feststellbar ist, und dass der Arretierbolzen (26) nur bei festgestellter Ruheposition aktivierbar ist.

## Claims

1. Device for working of a wooden workpiece (1), in particular a wooden beam, with a transport device for clamping and positioning of the workpiece and with a least one tool (2) which is able to be driven by means of a drive device (3), said drive device comprising an electric motor onto which the tool is directly mounted, the drive device being arranged to be able to displace along several movement axes within the feed area of the transport device (9), characterized in that
- the drive device is attached to an extending arm (6), said arm being able to displace by means of a motor in a plane transverse to the feed direction (F) of the transport device in a vertical and a horizontal direction (B, A,), and that the drive device (3) is further able to be rotated by means of a motor about the axis (C) of the extending arm and about an axis (D) transverse to the axis of the extending arm,
- the drive device (3) possesses a tool holding device for the interchangeable fitting of different tools,
- a tool magazine (5) with several tools is arranged above the working area of the tool,
- the drive device for fitting or release of a tool is able to be inserted into the tool magazine,
- the transport device possesses at least one clamping carriage (9) running fixed on rails and driven by means of a motor,
- and the feed motion of the clamping carriage (9) is controlled to coordinate with the motion of the tool (2).

2. Device according to claim 1, characterized in that the tool magazine (5) possesses a holder rack (7) arranged to be approximately parallel to the extending arm and with tool holders (8) arranged in a row, and that the holder rack (7) for fitting or release of the tool is able to be displaced in relation to the extending arm (6).

3. Device according to claims 1 or 2, characterized in that the clamping carriage (9) possesses a support surface (10) for the workpiece (1) and that the workpiece is able to impinged upon, in each case with at least one separate clamping device (11, 71), by a clamping force in the plane of the support surface and transverse to this plane.

4. Device according to claim 3, characterized in that the workpiece (1) is able to be impinged upon, across the support surface (10), with a clamping device which possesses a pivoting clamping beam (12) whose centre of rotation (49) lies to one side of the support surface.

5. Device according to one of the claims 1 to 4 comprising an electric motor with a housing (15) accommodating a rotor (13) and a stator (14) and with a drive shaft mounted in bearings within the housing, characterized in that the drive shaft is formed as a hollow shaft (16) extending at both sides beyond the rotor and which at one end is provided with a fitting device for the interlocking fitting of a tool (2) and that a gripping device is arranged in the hollow shaft (16) for holding the tool in the fitting device.

6. Device according to claim 5, characterized in that the acceptance device possesses an engagement disk (17) which surrounds an inside taper (18) for accepting a morse taper (19) and that the gripping device possesses a gripping claw (21) fixed to a tensioning rod (20) which is able to activated by means of axial displacement of the tensioning rod in the hollow shaft (16).

7. Device according to claim 6, characterized in that a spring device (22) is arranged at the end of the hollow shaft (16) opposite the fitting device, said spring device engaging in the tensioning rod (20) and being able to be pretensioned with the tensioning rod in such a way that the gripping claw (21) is only able to be opened against the force of the spring.

8. Device according to claim 7, characterized in that a pressure cylinder (23) is arranged on the housing, said pressure cylinder piston being arranged coaxially to the tensioning rod (20) and being able to be displaced with the tensioning rod within the hollow shaft against the force of the spring (22).

9. Device according to claim 8, characterized in that both the tensioning rod (20) and the piston (24) are provided with a coaxial bore (25), that both the bores are open to one another when the piston (24) is pressed against the tensioning rod (20) and that, at the piston (24), the bore is connected to a compressed air supply for pneumatic activation of the fitting device.

10. Device according to one of the claims 6 to 9, characterized in that the engagement disk (17) is able to be locked with a locking pin (26) at a predetermined position of the engagement disk, said locking pin being able to engage in a recess (27).

11. Device according to claim 10, characterized in that the locking pin (26) is arranged on a piston (28) which is able to displace within a pressure cylinder (29), said pressure cylinder being integrally formed with the housing (15).

12. Device according to claims 10 and 11, characterized in that the rest position of the engagement disk (17) is able to be ascertained by means of a sensor (30), said sensor being fixed in relation to the engagement disk, and that the locking pin (26) is only able to be activated at an ascertained rest position.

## Revendications

1. Dispositif pour travailler une pièce (1) en bois, notamment des poutres en bois, comportant un dispositif de transport pour serrer et déplacer la pièce, et au moins un outil (2) qui est apte à être entraîné à l'aide d'un dispositif d'entraînement (3) composé d'un moteur électrique auquel l'outil est fixé directement, le dispositif d'entraînement étant disposé pour pouvoir être déplacé avec la pièce (2) suivant plusieurs axes de déplacement dans la zone d'avance du dispositif de transport (9), caractérisé
- en ce que le dispositif d'entraînement est fixé à un bras (6) qui est apte à être déplacé à l'aide d'un moteur dans les sens vertical et horizontal (B, A) dans un plan perpendiculaire au sens d'avance (F) du dispositif de transport, et en ce que le dispositif d'entraînement (3) est par ailleurs apte à tourner à l'aide d'un moteur sur l'axe du bras (C) et sur un axe perpendiculaire à l'axe du bras (D),
- en ce que le dispositif d'entraînement (3) comporte un dispositif porte-pièce destiné à recevoir alternativement différentes pièces,
- en ce qu'il est prévu, au-dessus de la zone d'action de l'outil, un magasin (5) contenant plusieurs outils,
- en ce que le dispositif d'entraînement est apte à entrer dans le magasin d'outils pour prendre et déposer un outil,
- en ce que le dispositif de transport comporte au moins un chariot porte-pièce (9) sur rails apte à être déplacé à l'aide d'un moteur,
- et en ce que le mouvement d'avance du chariot porte-pièce (9) est apte à être commandé de façon coordonnée avec le mouvement de l'outil (2).

2. Dispositif selon la revendication 1, caractérisé en ce que le magasin d'outils (5) comporte une grille de support (7) disposée sensiblement parallèlement au bras et comportant des porte-outils (8) disposés en ligne, et en ce que la grille de support (7) est apte à être déplacée par rapport au bras (6) en vue de prendre et de déposer les outils.

3. Dispositif selon la revendication 1 ou 2, caractérisé en ce que le chariot porte-pièce (9) comporte une surface d'appui (10) pour la pièce (1), et en ce que la pièce est apte à être sollicitée à l'aide d'au moins un dispositif de serrage séparé (11, 71) par une force de serrage dans le plan de la surface d'appui et perpendiculairement à ce plan.

4. Dispositif selon la revendication 3, caractérisé en ce que la pièce (1) est apte à être sollicitée perpendiculairement au plan de la surface d'appui (10) à l'aide d'un dispositif d'appui qui comporte une poutre de serrage (12) apte à être relevée dont le centre de rotation (49) se trouve sur un côté de la surface d'appui.

5. Dispositif selon l'une des revendications 1 à 4, formé d'un moteur électrique comportant un carter (15) contenant un rotor (13) et un stator (14), et un arbre d'entraînement monté dans le carter, caractérisé en ce que l'arbre d'entraînement est conçu comme un arbre creux (16) qui dépasse des deux côté du rotor et qui est pourvu, à une extrémité, d'un dispositif de réception destiné à recevoir par force un outil (2), et en ce qu'il est prévu, dans l'arbre creux (16), un dispositif de préhension pour immobiliser un outil dans le dispositif de réception.

6. Dispositif selon la revendication 5, caractérisé en ce que le dispositif de réception comporte un disque d'entraînement (17) qui entoure un cône intérieur (18) destiné à recevoir un cône Morse (19), et en ce que le dispositif de préhension comporte une griffe de serrage (21) qui est fixée à une barre de serrage (20) et qui est apte à être actionnée par le déplacement axial de la barre de serrage dans l'arbre creux (16).

7. Dispositif selon la revendication 6, caractérisé en ce qu'il est prévu, à l'extrémité de l'arbre creux (16) opposée au dispositif de réception, un dispositif formant ressort (22) qui agit au niveau de la barre de serrage (20) et à l'aide duquel ladite barre de serrage est apte à être précontrainte de telle sorte que la griffe de serrage (21) ne peut s'ouvrir qu'à l'encontre de la force de ressort.

8. Dispositif selon la revendication 7, caractérisé en ce qu'il est prévu, au niveau du carter, un cylindre à commande par pression (23) dont le piston (24) est disposé coaxialement par rapport à la barre de serrage (20) et à l'aide duquel la barre de serrage est apte à être déplacée dans l'arbre creux (16) à l'encontre de la force du dispositif formant ressort (22).

9. Dispositif selon la revendication 8, caractérisé en ce que la barre de serrage (20) et le piston (24) sont tous les deux pourvus d'un alésage coaxial (25), en ce que les deux alésages communiquent lorsque le piston (24) est pressé contre la barre de serrage (20), et en ce que l'alésage prévu au niveau du piston (24) est raccordé à une source d'air comprimé pour la purge du dispositif de réception.

10. Dispositif selon l'une des revendications 6 à 9, caractérisé en ce que le disque d'entraînement (17) est apte à être arrêté à l'aide d'un boulon d'arrêt (26) qui, dans une position du disque d'entraînement (17) apte à être prédéfinie, est encliquetable dans un creux (27).

11. Dispositif selon la revendication 10, caractérisé en ce que le boulon d'arrêt (26) est disposé sur un piston (28) qui est apte à être déplacé dans un vérin à commande par pression (29) intégré dans le carter (15).

12. Dispositif selon la revendication 10 ou 11, caractérisé en ce que la position de repos du disque d'entraînement (17) peut être déterminée à l'aide d'un détecteur (30) fixe par rapport au disque d'entraînement, et en ce que le boulon d'arrêt (26) ne peut être activé que lorsque la position de repos est déterminée.
